# EUROPEAN PATENT APPLICATION

(11) **EP 1 974 614 A1**
(43) Date of publication of application: **01.10.2008**
(21) Application number: 07104970.4
(22) Date of filing: 27.03.2007
(51) Int. Cl.: A23G 1/56, A23F 5/38, A23L 2/39, A23L 1/00

(54) **Particulate structuration for improving the dissolution kinetics of food powders**

(71) Applicant: Nestec S.A., 1800 Vevey (CH)
(72) Inventor: Marabi Alejandro, CH-1005 Lausanne (CH); Burbidge Adam, CH-1273 Arzier (CH); Raemy Alois, CH 1814 La Tour-de-Peilz (CH)
(74) Representative: Marquardt, Ulf

(57) **Abstract**

The present invention relates to the field of modification of dissolution kinetics of particulate materials. In particular, the present invention relates to the adaptation of the dissolution kinetics of powders, e.g., food powders to a particular purpose. One embodiment of the present invention relates to a Composite Particle to be dissolved comprising at least two solid soluble sub-particles, at least one of which has a negative heat of dissolution in the liquid the Composite Particle is to be dissolved in.

## Description

The present invention relates to the field of modification of dissolution kinetics of particulate materials. In particular, the present invention relates to the adaptation of the dissolution kinetics of powders, e.g., food powders to a particular purpose.

Food powders, such as milk, coffee, chocolate, beverage mixes (e.g., cappuccino), soups and infant formulas, represent a significant portion of convenience products that are gaining increased attention by the food industry. The dissolution kinetics of food powders is of critical importance in many industrial and consumer applications and it is one of the relevant factors that defines product quality.

A vast amount of research has been devoted towards the understanding of the dissolution kinetics of powders, mainly in the pharmaceutical and food industries. At the consumer level, rapid, easy and complete dissolution and reconstitution of powders in water or other liquid media (e.g., milk) are essential for practical use, whereas organoleptic concerns might limit the utilization of certain ingredients.

When engineering such products, the aim is generally to achieve good dissolution properties, and to minimize the time required to complete the process. Most of the powders mentioned above are dissolved in hot water, which generally contributes to an increased dissolution speed.

However, several powders which are aimed to be dissolved in cold (e.g., 5-10°C) water or milk have recently appeared in the market. Moreover, products in powder form containing bioactive ingredients that might be sensitive to heat should be reconstituted at low temperature.

Consequently, there is a need to develop new strategies to optimize the dissolution of powders, in particular food powders, which are temperature independent and could eventually be applied to a wide range of products.

The dissolution of amorphous materials is characterized by an exothermic dissolution. In contrast, when a crystalline material is dissolved, an endothermic response is observed (Miller and de Pablo, "Calorimetric solution properties of simple saccharides and their significance for the stabilization of biological structure and function" Journal of Physical Chemistry B 104 (2000) 8876-8883). This effect is a consequence of the higher energy state of the amorphous form, leading to a thermodynamically unstable material, as compared to the stable, crystalline form.

Accordingly, an advantage of the amorphous material versus its crystalline counterpart in terms of dissolution speed is observed, which is independent of the temperature at which the process is carried out (Hancock and Parks "What is the true solubility advantage for amorphous pharmaceuticals?" Pharmaceutical Research 17 (2000) 397-404).

Several methods utilized to improve the solubility of poorly soluble agents are mentioned in United States Patent Application Publication No. 2003/0123250 A1, and include the formation of liposomes, vesicles, emulsions or colloidal suspensions; particle coating with dispersive agents, attrition or milling.

However, until today there is still a great need felt in the art to have a tool that allows to adjust the dissolution kinetics of a powder, in particular of a food powder, in a particular liquid to an intended purpose. For example it is common knowledge that to dissolve chocolate powder in cold milk is a process that is perceived by consumers as rather slow.

The present inventors have addressed this need.

Consequently, it was an object of the present invention to overcome the disadvantages of the state of the art and to provide the art with a tool to adjust the dissolution kinetics of a powder, in particular of a food powder in a particular liquid for an intended purpose, in particular to increase or to slow down the speed of dissolution.

This object was solved by a composite particle in accordance with claim 1, a product in accordance with claim 17, and by the methods in accordance with claims 22 and 31.

The present inventors have discovered unexpectedly that the combination of materials with different heats of dissolution, such as, e.g., of amorphous and crystalline materials in the same particle allows it to modify the dissolution kinetics. If this resulting particle, a composite particle, overall has a more exothermic dissolution than the original material to be dissolved, the dissolution speed will increase, other things being equal.

On the other hand, if this resulting composite particle overall has a more endothermic dissolution than the original material to be dissolved, the dissolution speed will decrease.

One object of the present invention is to increase the speed of dissolution of a material, e.g., a powder, in particular food grade-powders, both in hot and in cold liquids. The present inventors have discovered that this can be achieved through a careful design of the composite-particles' structure, e.g., by combining materials which present an exothermic dissolution with those having an endothermic dissolution. These materials are physically combined by e.g., agglomeration, solvent casting, co-spray drying, extrusion, solvent deposition and/or partial or complete crystallization, in a composite particle in order to achieve a close proximity between them. All the materials are preferably food grade, and might be already present in a given food product.

A material with the exothermic dissolution will provide a thermodynamic drive resulting in an increased dissolution speed of the additional components of the composite particle.

The present inventors have discovered that it is essential for the purpose of the present invention that the material with the exothermic (negative heat of) dissolution is present in the same composite particle as the material with the endothermic (positive heat of) dissolution, if one wishes to speed up the dissolution kinetics of the material mix. It would be insufficient in this respect if sub-particles of a material with an exothermic dissolution and sub-particles of a material with an endothermic or less exothermic dissolution were only present in the same powder but not in the same individual composite particle.

Another object of the present invention is to decrease the speed of dissolution of a material, e.g., a powder, both in hot and in cold liquids. This can be desired, e.g., in slow release formulations. The present inventors have discovered that this can be achieved again through a careful design of the composite particles' structure in analogy to the composite particle described above, however this time, e.g., by combining the material to be dissolved with another material with a more endothermic dissolution.

Without wanting to be bound to this theory the present inventors believe that this is the case because the exothermic particle acts as a local heat source, counteracting the endothermic heat sinking effect of the complementary particle. The net far field effect is that of a dipole rather than a sink, which is much weaker, and hence the heat transfer limitation is circumvented. Effectively the local microenvironment surrounding the particle becomes substantially decoupled from the bulk thermal state of the mixture resulting in the dissolution rate being largely independent of the bulk temperature.

Consequently, one embodiment of the present invention is a composite particle to be dissolved comprising at least two solid soluble sub-particles, at least one of which has a negative heat of dissolution in the liquid the composite particle is to be dissolved in. The at least two solid soluble sub-particles are not identical with respect to their chemical composition and their solid state (amorphous and/or crystalline). However, they can be identical with respect to either their chemical composition or their solid state.

For the purpose of the present invention is a composite particle a particle that comprises, preferably consists of, two or more sub-particles. The sub-particles are of an amorphous or of a crystalline nature or consist of a mixture thereof. The sub-particles interact in a way that they form a stable composite complex. Each of these sub-particles can itself be composed of one or more compounds at least one of which is soluble in a chemical sense in the liquid in which the particle is to be dissolved in.

"Soluble" includes for the purpose of the present invention solubility in the chemical sense comprising the formation of molecular interactions between the compound to be dissolved and the solvent, e.g., hydrogen bonding, van-der-Waals-interactions or solvation (coating with solvent molecules). However, "soluble" or "dissolved" includes for the purpose of this invention as well any state where the compound to be dissolved is not resting on the bottom of the glass or flask a short time after dissolution, e.g., after stirring. A "short time" corresponds to the intended use of the composite particle and is usually a time frame of about 5-60 seconds. For example, soluble chocolate powder contains components which are chemically insoluble in water. However, for the purpose of the present invention they should be regarded as soluble if they do not rest on the bottom of the cup after their addition and brief stirring as it is common in food applications.

In the composite particle of the present invention the way the sub-particles interact is not critical. Possible modes of interaction are by electrostatic interaction, hydrogen bonding, hydrophobic interaction, van der Waals forces, entropic effects, steric forces or by physical interaction or combinations of these. Interactions via physical interactions are preferred.

According to a preferred embodiment of the present invention the composite particle of the present invention comprises at least one sub-particle with a negative heat of dissolution that is of an amorphous nature and at least one other sub-particle of a crystalline nature and preferably with a positive heat of dissolution.

For the purpose of the present invention is a material amorphous if there is no long-range order of the positions of the atoms and/or molecules in the material. Usually, an amorphous material is an uncrystallized, undercooled system where the atoms and/or molecules making up the material have no long range order relative to each other. However, the constituent atoms and/or molecules are sufficiently immobile that the material will behave as a solid on a macroscopic scale.

A crystalline material on the other hand is a material that is characterized by translational, rotational and conformational order. The molecules and/or atoms making up the material are arrayed in a consistent repeating pattern.

Using crystalline and amorphous material has the advantage that the dissolution kinetics of one compound can be modified by using the same compound only in another physical state. No additional compounds are required. For example, the speed of dissolution of crystalline sugar can be significantly increased by providing the composite particle of the present invention consisting of a sub-particle consisting of crystalline sugar (carbohydrate) and a sub-particle consisting of amorphous sugar (carbohydrate).

The liquid, the composite particle of the present invention is to be dissolved in is not critical. Any liquid compound is suitable. Preferably, the liquid is selected from the group consisting of water, aqueous solutions, milk, fruit juices, oils, or mixtures thereof. These liquids may be pure solvents but may also comprise liquids that comprise other components. Examples are fruit or vegetable juices, coffee, tea or emulsions such as milk or salad dressings. The liquid may be hot or cold and is preferentially at about that temperature at which the product after the addition of the composite particle is to be used.

The subject matter of the present invention is particularly useful to provide food powders comprising the composite particles of the present invention to increase the food powder's speed of dissolution. In this case it is preferred that the sub-particles consist of food-grade material.

The size of the composite particle is not particularly limited. Of course, it is preferred that the composite particle of the present invention has a size that allows that the final product can be poured or handled, e.g., by a spoon, preferably in the form of a powder or of a granulate. In a preferred embodiment the composite particle has an average diameter of about 0.001 mm to 1 cm, preferably from about 0.01 mm to 0.5 cm, in particular preferred from about 0.1 mm to 10 mm. It is further preferred that the sub-particle with a negative heat of dissolution has an average diameter of about 0.0001 mm to 0.5 cm, preferably from about 0.001 mm to 10 mm, in particular preferred about 0.01 mm to 1 mm. Even more preferred is that all sub-particles have an average diameter of about 0.0001 mm to 0.5 cm, preferably from about 0.001 mm to 10 mm, in particular preferred about 0.01 mm to 1 mm.

The diameter of the sub-particles is one factor that will determine the efficiency by which the energy released from the particle with the exothermic energy of dissolution will be transferred to the sub-particle with the endothermic energy of dissolution. The more efficient this energy transfer is, the more effective can the dissolution kinetics be modulated.

The diameter of these composite particles and of the sub-particles can, e.g., be measured by light scattering techniques (e.g. Mastersizer from Malvern) or microscopic techniques. Other well suited methods are known to those of skill in the art.

Another important factor that influences the energy transfer between both sub-particles is the structure and the size of the interface between the sub-particles. As a general rule, the larger the interface is and the closer the contact of both sub-particles is at the interface, the better it will be possible to modify dissolution kinetics.

In order to speed up the dissolution of a composite particle it is preferred that at least one sub-particle with a negative heat of dissolution has a heat of dissolution of about -1 to -150 J/g, preferably from about -5 to -75 J/g, in particular preferred from about -15 to - 40 J/g.

In order to slow down the dissolution of a composite particle it is preferred that at least one sub-particle with a positive heat of dissolution has a heat of dissolution of about 1 to 100 J/g, preferably from about 5 to 60 J/g, in particular preferred from about 10 to 30 J/g.

A composite particle in accordance with the present invention that is designed to offer a slow dissolution has preferably an overall heat of dissolution of about 0 to 50 J/g, preferably, about 1 to 25 J/g, in particular preferred about 5 to 15 J/g.

On the other hand, a composite particle of the present invention that is designed to offer an increased speed of dissolution has preferably an overall heat of dissolution of about 0 to -50 J/g, preferably, about -1 to -25 J/g, in particular preferred about -1 to -5 J/g.

To adjust the speed of dissolution one can use different tools alternatively or at the same time. One can use a sub-particle with a particular high or low heat of dissolution to speed up or slow down the dissolution of the combined particle. Alternatively, one can use different volume/volume or weight/weight ratios of the at least 2 sub-particles. In this respect it is preferred that the weight ratio of the sub-particle with the negative heat of dissolution to the sub-particle with the positive heat of dissolution is from about 1:20 to 20:1, preferably from about 1:10 to 10:1, most preferred from about 1:5 to 5:1.

Those skilled in the art will realize that the subject matter of the present invention is not limited to any material or to any solvent. Instead, described is a physical process that is per se applicable to all materials as long as they are in principle soluble in the particular liquid that is to be used.

Consequently, it is one advantage of the present invention that it is possible to adjust the speed of dissolution of a material by using components that are already present in the material to be dissolved, only by modifying their physical structure. Contrary to the methods known from the prior art, the incorporation of foreign dissolution boosting materials is an option, but not required.

Also a chemical modification of the material to be dissolved is no longer necessary.

In one embodiment of the present invention at least one sub-particle comprises a carbohydrate, such as, e.g., sugar; a salt; a protein; or mixtures thereof.

The sugar is preferably selected from the group consisting of monosaccharides, in particular aldoses, e.g., erythrose, threose, ribose, arabinose, xylose, lyxose, allose, altrose, glucose, mannose, gulose, idose, galactose or talose, and ketoses, e.g., erythrulose, ribulose, xylulose, fructose, psicose, sorbose or tagatose; disaccharides, in particular sucrose, lactose, maltose, trehalose or cellobiose ; oligosaccharides, in particular fructo-oligosaccharides, galacto- oligosaccharides or mannan-oligosaccharides ; and polysaccharides.

It is particularly preferred that the sugar is selected from the group consisting of maltodextrins, in particular, maltodextrin DE 21, maltodextrin DE 15 or maltodextrin DE 12.

The salt is preferably selected from the group consisting of salts of alkali metals, e.g., lithium, sodium, potassium; alkaline earth metals, e.g., magnesium, calcium; Aluminium; Ammonium; Copper (II); Iron (II); Iron (111); Zinc and of inorganic acids, e.g. HCl, H₃PO₄; and/or organic acids, e.g., formic acid, acetic acid, propionic acid, valeric acid, enanthic acid, pelargonic acid, acrylic acid; Fatty acids; e.g., butyric acid, lauric acid, docosahexaenoic acid, eicosapentaenoic acid; amino acids; keto acids, e.g. pyruvic acid, acetoacetic acid; aromatic carboxylic acids, e.g., benzoic acid, salicylic acids; dicarboxylic acids, e.g., aldaric acid, oxalic acid, malonic acid, malic acid, succinic acid, glutaric acid, adipic acid; tricarboxylic acids, e.g., citric acid; alpha hydroxy acids, e.g. lactic acid.

An example of a composite particle of the present invention comprises at least one sub-particle comprising a carbohydrate, a salt, a gluco-oligosaccharide or mixtures thereof, wherein, preferably the salt is Na-Caseinate and the carbohydrate is maltodextrin DE 21.

For food applications it is in particular preferred that at least one sub-particle consists of a single component or of a mixture of components selected from the group consisting of milk powder, a soluble coffee, a soluble chocolate powder, a beverage mix in powder form, e.g. cappuccino, an instant soup, a soluble malt beverage, a powder for specialized nutrition or an infant formula.

The composite particle of the present invention can be used as a product as such. However, products that comprise at least one composite particle as described above are also to be considered within the scope of the present invention.

Preferably, however, comprises a product of the present invention the composite particle of the present invention in an amount of about 5 to 100 weight-%, preferably of about 30 to 100 weight-%, more preferred of about 50 to 100 weight %, in particular preferred of about 75 to 100 weight-%.

This product of the present invention can be a product for any purpose where a dissolution speed is to be modified but is preferably a food product, in particular a food product selected from the group consisting of milk powder, coffee powder, chocolate powder, beverage mixes, e.g. cappuccino, instant soups, soluble malt beverages and infant formulas.

The product of the present invention is preferably powdered, aggregated or pelletized in order to ensure proper and safe handling.

The composite particles can be prepared by providing the components of the sub-particles, e.g., directly in the form of a sub-particle or in a droplet, and combining them to one composite particle comprising two or more sub-particles.

The composite particle can be prepared by, e.g., agglomeration, extrusion, co-spray drying, solvent casting, solvent deposition and/or partial or complete crystallization.

These individual techniques are well established. Those of skill in the art will therefore know how to employ them.

Preferably, the particles of the present invention are prepared by a method comprising the steps of
- preparing a first powder comprising sub-particles of a first material, wherein the sub-particles have a negative heat of dissolution in the liquid the composite particle is to be dissolved in
- preparing a second powder comprising sub-particles of a second material, wherein the sub-particles have a less negative or positive heat of dissolution in the liquid the composite particle is to be dissolved in than the sub-particles of the first material, wherein the first and second material can have the same or different chemical compositions
- mixing the powders and agglomerating them
- drying the agglomerated product to obtain the composite particles.

In one embodiment the first powder comprises sub-particles of an amorphous nature and the second powder comprises sub-particles of a crystalline nature.

Agglomerating the mixed powders comprising the sub-particles is preferably carried out by wet agglomeration or heat agglomeration. Those skilled in the art will realize that this same process can be carried out by using more than two powders. Also more than two kinds of sub-particles can be used.

The agglomeration step is preferably carried out in an agglomerator. An agglomerator is a device that causes material to gather into a relatively permanent mass in which the original particles are still identifiable. The size of the resulting particles is enlarged in the process with respect to that of the original sub-particles.

Preferably this method is carried out with powders, wherein at least one powder comprises a milk powder, a soluble coffee, a soluble chocolate powder, a beverage mix in powder form, e.g. cappuccino, an instant soup, a soluble malt beverage, a powder for specialized nutrition or an infant formula.

The present invention comprises composite particles obtainable by one of the methods described above.

The present invention also comprises the use of a composite particle in accordance with the present invention to modulate the speed of dissolution of a material to be dissolved in a liquid.

A further embodiment of the present invention is a method to modulate the speed of dissolution of a material to be dissolved in a liquid comprising the step of combining at least one sub-particle comprising the material to be dissolved having one heat of dissolution in the liquid with at least one other sub-particle of a material with a different heat of dissolution in the liquid in one composite particle.

This method can be carried out by using a composite particle in accordance with one of claims 1-16.

For this method the same considerations, embodiments and advantages apply as detailed above with respect to the composite particle itself.

In a preferred embodiment of this method the at least two sub-particles exhibit different solvent accessible surfaces, preferably at least one particle is amorphous and one particle is crystalline.

Furthermore, the at least two sub-particles have the same or a different chemical composition.

One aspect of the present invention is therefore a method to slow down the speed of dissolution of a material to be dissolved, comprising the step of combining at least one sub-particle comprising the material to be dissolved with at least one other particle of a material with a more positive heat of dissolution in one composite particle.

Another aspect of the present invention is a method to increase the speed of dissolution of a material to be dissolved, comprising the step of combining at least one sub-particle comprising the material to be dissolved with at least one other particle of a material with a lower heat of dissolution in one composite particle.

Those skilled in the art will understand that they can combine all features described herein without departing from the scope of the present invention.

Further advantages and embodiments of the present invention will be apparent from the following examples and/or from the following figures.

Figure 1 shows the Aeromatic agglomerator which represents one possible tool to prepare the composite particles of the present invention.

Figure 2 shows microscopic images obtained with a microscope. a) chocolate beverage powder; b) agglomerated chocolate beverage powder; c) maltodextrin DE21; d) agglomerated maltodextrin DE21; e) agglomerated chocolate beverage powder + maltodextrin DE21 representing one embodiment of a composite particle of the present invention.

Figure 3 presents a typical curve obtained by isothermal calorimetry during the dissolution of the chocolate beverage powder in water at 30°C, showing the endothermic response when measuring the heat of dissolution of the chocolate beverage powder.

Figure 4 shows a typical curve obtained by isothermal calorimetry during the dissolution of Maltodextrin DE21 in water at 30°C, showing the exothermic response.

Figure 5 shows a typical curve obtained by isothermal calorimetry during the dissolution of one embodiment of the composite particle of the present invention, here agglomerated chocolate beverage powder with Maltodextrin DE21 (40:60 w/w) in water at 30°C, showing a slight exothermic response.

Figure 6 shows the measured conductivity as a function of time for the maltodextrin dissolved in water at 30°C at 500 RPM.

Figure 7 shows the dissolution kinetics of the agglomerated chocolate beverage powder (dashed line) and the composite particles according to one embodiment of the present invention (chocolate beverage powder + maltodextrin, solid line), as assessed by conductimetry.

Figure 8 shows the measured improvement of the dissolution kinetics one embodiment of the composite particle of the present invention (here agglomerated chocolate beverage powder + Maltodextrin) compared to agglomerated chocolate beverage powder.

Figure 9 depicts the dissolution kinetics as observed from single particles of agglomerated chocolate beverage powder in comparison to one embodiment of the composite particle of the present invention (here agglomerated chocolate beverage powder + Maltodextrin).

Figure 10 shows the dissolution kinetics as derived from single particles image analysis for agglomerated chocolate beverage powder (circles) and one embodiment of the composite particle of the present invention (here agglomerated chocolate beverage powder + Maltodextrin) (triangles).

### EXAMPLE 1

### Preparation of the composite particles

The preparation of a composite particle including a food powder showing an endothermic response upon dissolution and a carbohydrate resulting in an exothermic response is presented in the following example.

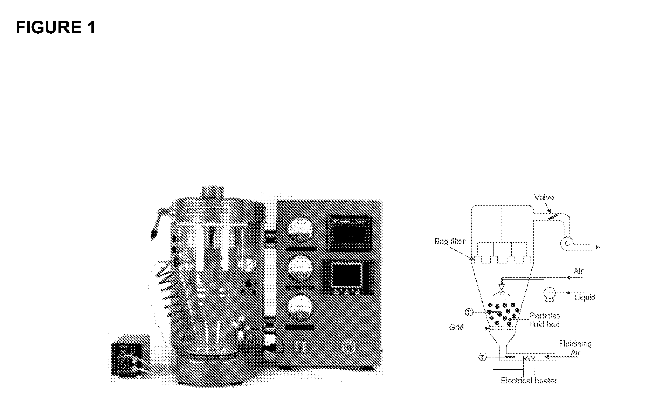

A typical chocolate beverage powder presenting an endothermic dissolution was agglomerated with maltodextrin DE21 (exothermic dissolution). The agglomeration process was carried out in an Aeromatic agglomerator (Figure 1). Basically, both powders are introduced in the agglomerator and fluidized by means of air flowing from the bottom. A special nozzle located at the top is utilized in order to spray water. The process is carried out for a determined amount of time (typically 20 min) depending on the conditions, composition of the initial powders and the desired characteristics of the final product. The obtained composite particle is further dried in a vacuum oven at low temperature in order to achieve the corresponding final moisture content.

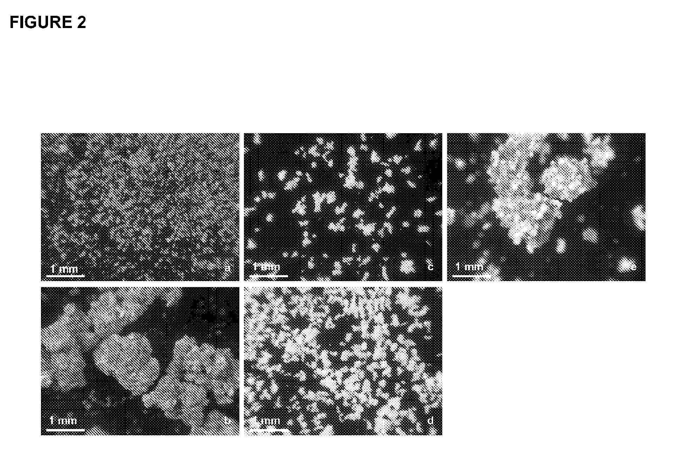

Both the maltodextrin and the chocolate beverage powder were also subjected to the same treatment separately (i.e., agglomerated with itself). The obtained agglomerates were observed under the microscope and the photographs are presented in Figure 2. The agglomerated chocolate beverage powder presented a bigger particle size than the initial product, and it was utilized as the reference for comparing the dissolution kinetics of the chocolate beverage powder agglomerated with the maltodextrin, in order to have a similar particle size and surface area. Maltodextrin was exposed to the same treatment conditions and checked for its dissolution enthalpy in order to assure that the exothermic properties remain even after the agglomeration process. In Figure 2e, the resulting composite particles consisting of agglomerated chocolate beverage powder and maltodextrin in a ratio of 40:60 w/w is shown. It can be seen that composite particles present a homogeneous mix of the components.

### EXAMPLE 2

### Dissolution enthalpy of chocolate beverage powder

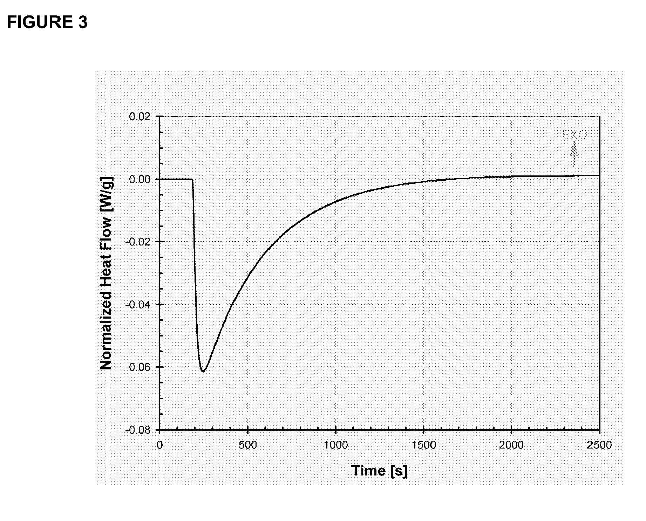

The dissolution enthalpy of a chocolate beverage powder was measured with a membrane cell in a Calvet Calorimeter (C80, Setaram, France) at 30°C in water. The mixing (60 RPM) was carried out by an externally controlled stirrer, which closely reproduces a real situation in which the powder is poured and manually stirred when preparing a real instant drink. Figure 3 presents a typical curve obtained when measuring the heat of dissolution of the chocolate beverage powder. This product presents a significant endothermic response, with a measured heat of dissolution of ca. 24 J/g (endothermic).

### Dissolution enthalpy of Maltodextrin DE21

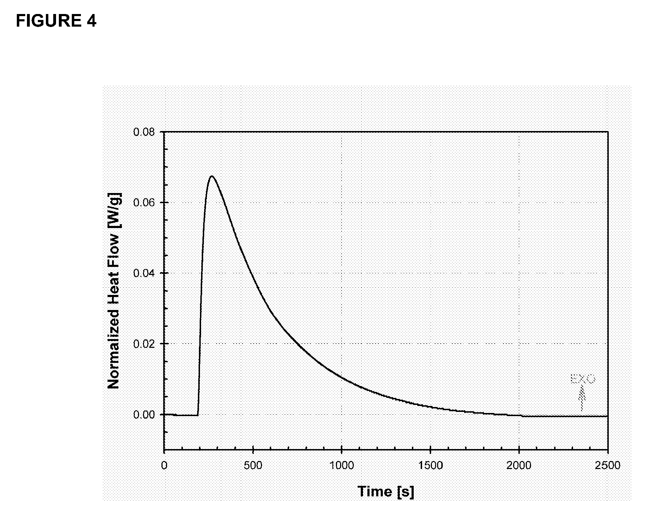

Figure 4 presents the calorimetric curve obtained for the dissolution of Maltodextrin DE21 (using the same condition as for the chocolate power). In contrast to other powder mixes, the Maltodextrin alone resulted in an exothermic response upon dissolution of ca. -30 J/g.

### Dissolution enthalpy of a composite particle containing a chocolate beverage powder and Maltodextrin DE21

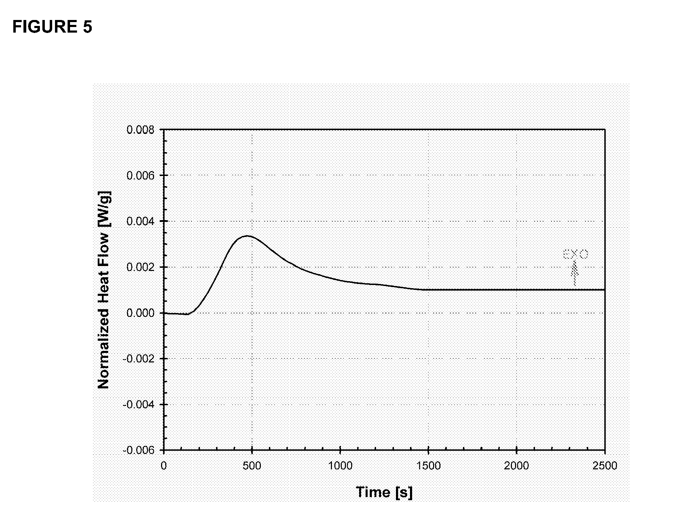

When the enthalpy of dissolution of a composite particle containing a chocolate beverage powder and maltodextrin was measured an almost nil calorimetric response was obtained as can be seen in Figure 5. Moreover, the measured value of the enthalpy is close to zero (ca. -2 J/g), close to the weighed average of the ratio of the chocolate beverage powder and the maltodextrin utilized in the agglomeration process. By adopting this approach the heat of dissolution can be "tuned" and converted from endothermic to exothermic by utilizing the appropriate material having an exothermic response upon dissolution and by a correct design of the microstructure of the composite particle. This approach shows that the heat of dissolution can be controlled to obtain exothermic values that will contribute to a more spontaneous dissolution process.

### Improvement of the dissolution kinetics of a food powder

In order to evaluate and compare the dissolution kinetics of a composite particle containing a chocolate beverage powder, conductivity measurements were carried out. In order to compare the dissolution kinetics of the agglomerated chocolate beverage powder and the composite particle containing both the chocolate beverage powder and the maltodextrin, an equivalent amount of the former was utilized in all cases; i.e., 1 gram of agglomerated chocolate beverage powder was compared to 2.5 grams of the composite particle.

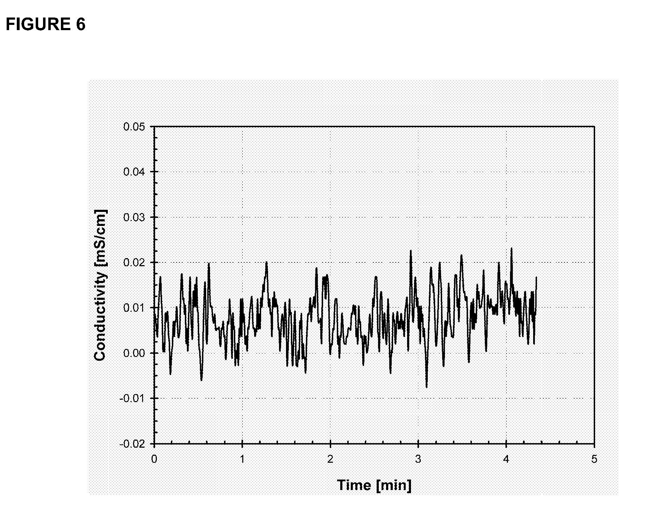

It was found that the conductivity of the maltodextrin during the dissolution process is negligible (Figure 6). Consequently, it is not necessary to correct for its effect upon the dissolution of the agglomerated mixture. All the conductivity values measured are then due to the dissolution of the chocolate beverage powder in the mixture and could be directly compared to that obtained from the agglomerated chocolate beverage powder alone.

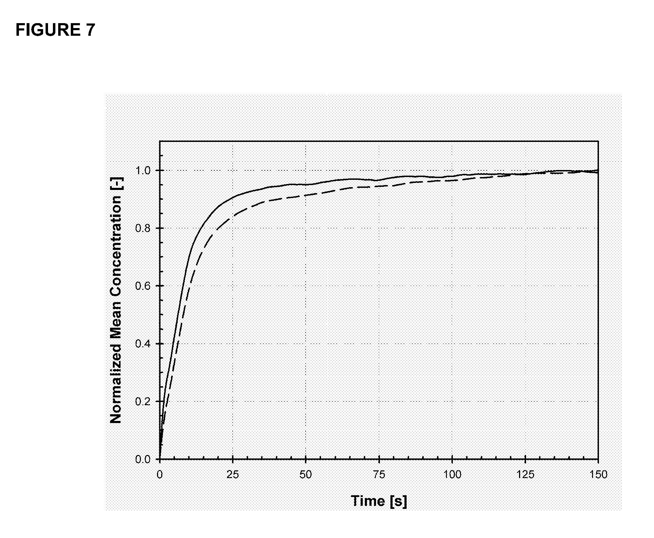

The results of the conductivity measurements are presented in Figure 7. An improvement in the dissolution speed was observed when the chocolate beverage powder and the maltodextrin were present in the composite particle, as compared to the agglomerated chocolate beverage powder alone. This effect exists even if the surface covered by the maltodextrin in the composite particle is significant, which would be expected to reduce the dissolution speed. A more exothermic response will further improve the dissolution kinetics. This can be achieved by replacing the maltodextrin utilized in the present example with materials having more exothermic dissolution.

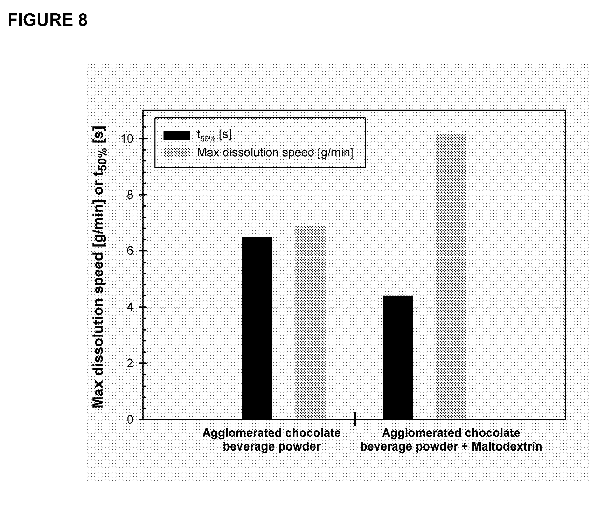

From the above data, it is possible to quantify the effective improvement of the dissolution kinetics in terms of the time needed to dissolve 50% of the powder sample (t_{50%}) and also derive the maximal dissolution speed obtained during the whole dissolution process. These data is shown in Figure 8. The T_{50%} of the composite particle was ca. 32% lower than that of the agglomerated chocolate beverage powder alone, while the maximal dissolution speed was ca. 30% higher for the composite particle.

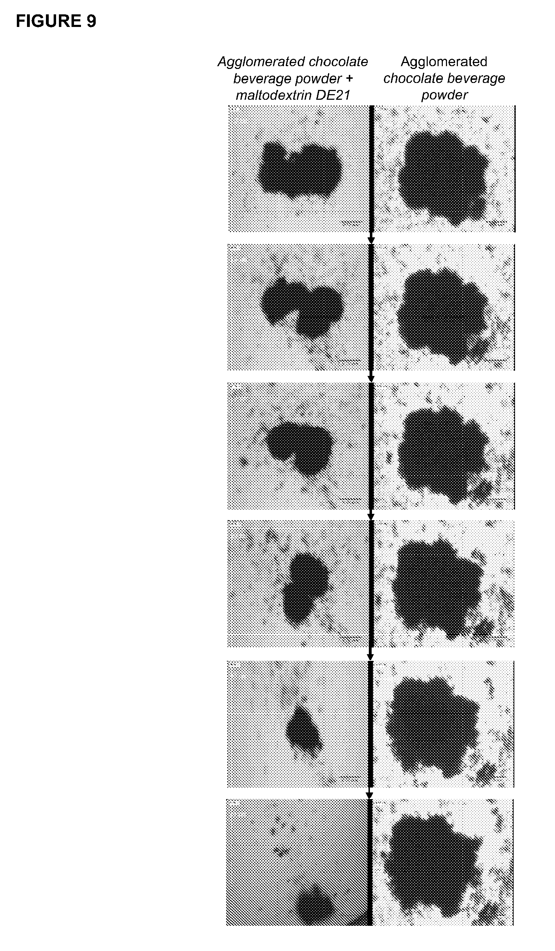

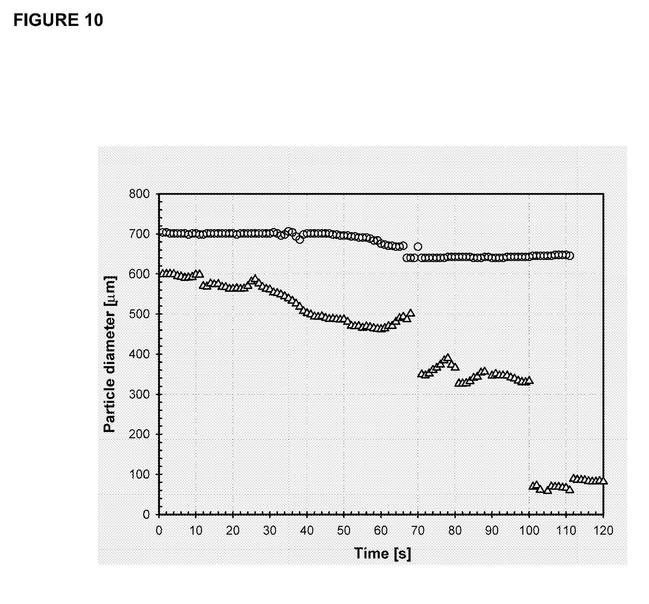

In order to further asses the differences between the reference sample (agglomerated chocolate beverage powder alone) and the composite particle, image analysis was utilized. Basically, the dissolution of single particles is recorded as a movie (30°C, no flow, 100:1 1 water:particle ratio), and the moving boundaries of the dissolving solid are automatically detected. Various measurements are then derived, such as min, max and mean diameter, weight, etc. Figure 9 shows several frames (every 10 s) of the acquired movies. The difference in the dissolution behavior of both particles can clearly be observed. The data shown in Figure 10 is based on the image analysis of each frame for which the particle diameter was derived. It clearly shows that for the composite particle the time to complete dissolution is ca. 120 s, while for the agglomerated chocolate beverage powder alone only a small fraction of the initial particle was dissolved at the same period of time. The discontinuities observed in the composite particle are due to the split taking place during the dissolution process. After this split, the biggest part was followed, and it was observed that all the small particles dissolved in parallel and showed the same rate of dissolution. In any case, the difference in dissolution rate is evident.

## Claims

1. Composite Particle to be dissolved comprising at least two solid soluble sub-particles, at least one of which has a negative heat of dissolution in the liquid the Composite Particle is to be dissolved in.

2. Composite Particle in accordance with claim 1, wherein the liquid the Composite Particle is to be dissolved in is selected from the group consisting of water, aqueous solutions, milk, fruit juices and oils.

3. Composite Particle in accordance with one of claims 1-2, **characterized in that** the sub-particles are in direct contact with each other by physical interaction.

4. Composite Particle in accordance with one of claims 1-3, **characterized in that** at least one sub-particle with a negative heat of dissolution is of an amorphous nature and at least one other sub-particle is of a crystalline nature and has preferably a positive heat of dissolution.

5. Composite Particle in accordance with one of claims 1-4, **characterized in that** at least one, preferably all of the sub-particles consist of food-grade material.

6. Composite Particle in accordance with one of claims 1-5, **characterized in that** the Composite Particle has an average diameter of about 0.001 mm to 1 cm, preferably from about 0.01 mm to 0.5 cm, in particular preferred from about 0.1 mm to 10 mm.

7. Composite Particle in accordance with one of claims 1-6, **characterized in that** at least one sub-particle with a negative heat of dissolution has an average diameter of about 0.0001 mm to 0.5 cm, preferably from about 0.001 mm to 10 mm, in particular preferred about 0.01 mm to 1 mm.

8. Composite Particle in accordance with one of claims 1-7, **characterized in that** all sub-particles have an average diameter of about 0.0001 mm to 0.5 cm, preferably from about 0.001 mm to 10 mm, in particular preferred about 0.01 mm to 1 mm.

9. Composite Particle in accordance with one of claim 1-8, **characterized in that** at least one sub-particle with a positive heat of dissolution has a heat of dissolution of about 1 to 100 J/g, preferably from about 5 to 60 J/g, in particular preferred from about 10 to 30 J/g.

10. Composite Particle in accordance with one of claims 1-9, **characterized in that** at least one sub-particle with a negative heat of dissolution has a heat of dissolution of about -1 to -150 J/g, preferably from about -5 to -75 J/g, in particular preferred from about -15 to -40 J/g.

11. Composite Particle in accordance with one of claims 1-10, **characterized in that** it has an overall heat of dissolution of about 0 to 50 J/g, preferably, about 1 to 25 J/g, in particular preferred about 5 to 15 J/g

12. Composite Particle in accordance with one of claims 1-10, **characterized in that** it has an overall heat of dissolution of about 0 to -50 J/g, preferably, about -1 to -25 J/g, in particular preferred about -1 to -5 J/g.

13. Composite Particle in accordance with one of claims 1-12, **characterized in that** the weight ratio of the sub-particle with the negative heat of dissolution to the sub-particle with the positive heat of dissolution is from about 1:20 to 20:1, preferably from about 1:10 to 10:1, most preferred from about 1:5 to 5:1.

14. Composite Particle in accordance with one of claims 1-13, **characterized in that** at least one sub-particle comprises a sugar, a salt, a gluco-oligosaccharide or mixtures thereof.

15. Composite Particle in accordance with claim 14, **characterized in that** the salt is Na-Caseinate and the sugar is maltodextrin DE 21.

16. Composite Particle in accordance with one of claims 1-15, **characterized in that** at least one sub-particle consist of a single compound or of a mixture of compounds such as a milk powder, a soluble coffee, a soluble chocolate powder, a beverage mix in powder form, e.g. cappuccino, an instant soup, a soluble malt beverage or an infant formula.

17. Product comprising at least one Composite Particle in accordance with one of claims 1-16.

18. Product in accordance with claim 17, **characterized in that** it comprises the Composite Particle of claims 1-16 in an amount of 5 to 100 weight-%, preferably 30 to 100 weight-%, more preferred 50 to 100 weight %, in particular preferred 75 to 100 weight-%.

19. Product in accordance with one of claims 17-18, **characterized in that** it is a food product.

20. Product in accordance with one of claims 17-19, **characterized in that** it is powdered, aggregated or pelletized.

21. Product in accordance with one of claims 17-20, **characterized in that** it is selected from the group consisting of milk powder, coffee powder, chocolate powder, beverage mixes, e.g. cappuccino, instant soups, soluble malt beverages and infant formulas.

22. Method to prepare Composite Particles in accordance with one of claims 1-16 comprising the steps of by providing the components of the sub-particles and combining them to a composite particle comprising two or more sub-particles.

23. Method in accordance with claim 22 directly wherein the components of the sub-particles are provided directly in the form of a sub-particle or in a droplet.

24. Method in accordance with one of claims 22 - 23 wherein the sub-particles are combined to a composite particle by a method selected from the group consisting of agglomeration, extrusion, co-spray drying, solvent casting, solvent deposition and/or partial or complete crystallization.

25. Method in accordance with one of claims 22-24 comprising the steps of
- preparing a first powder comprising sub-particles of a first material, wherein the sub-particles have a negative heat of dissolution in the liquid the Composite Particle is to be dissolved in
- preparing a second powder comprising sub-particles of a second material, wherein the sub-particles have a less negative or positive heat of dissolution in the liquid the Composite Particle is to be dissolved in than the sub-particles of the first material, wherein the first and second material can have the same or different chemical compositions
- mixing the powders and agglomerating them
- drying the agglomerated product to obtain the Composite Particles.

26. Method in accordance with claim 25, **characterized in that** agglomerating the mixed powders comprising the sub-particles is carried out by wet agglomeration or heat agglomeration.

27. Method in accordance with one of claims 25-26, **characterized in that** the first powder comprises sub-particles of an amorphous nature and the second powder comprises sub-particles of a crystalline nature.

28. Method in accordance with one of claims 25-27, **characterized in that** more than two powders comprising sub-particles are employed.

29. Method in accordance with claims 25-28, **characterized in that** the steps of agglomerating the powders are carried out in an agglomerator.

30. Method in accordance with one of claims 22-29, **characterized in that** at least one sub-particle comprises a milk powder, a soluble coffee, a soluble chocolate powder, a beverage mix in powder form, e.g. cappuccino, an instant soup, a soluble malt beverage or an infant formula.

31. Use of a Composite Particle in accordance with one of claims 1-16 to modulate the speed of dissolution of a material to be dissolved in a liquid.

32. Method to modulate the speed of dissolution of a material to be dissolved in a liquid comprising the step of combining at least one sub-particle comprising the material to be dissolved with one heat of dissolution in the liquid with at least one other sub particle of a material with a different heat of dissolution in the liquid in one Composite Particle.

33. Method in accordance with claim 32, **characterized in that** the at least two sub-particles exhibit different solvent accessible surfaces, preferably at least one particle is amorphous and one particle is crystalline.

34. Method in accordance with one of claim 32-33, **characterized in that** the at least two sub-particles have the same or a different chemical composition.

35. Method in accordance with one of claims 32-34 to slow down the speed of dissolution of a material to be dissolved, comprising the step of combining at least one sub-particle comprising the material to be dissolved with at least one other particle of a material with a higher heat of dissolution in one Composite Particle.

36. Method in accordance with one of claims 32-35 to increase the speed of dissolution of a material to be dissolved, comprising the step of combining at least one sub-particle comprising the material to be dissolved with at least one other particle of a material with a lower heat of dissolution in one Composite Particle.
